# FASCICULE DE BREVET EUROPEEN

(11) **EP 0 784 181 B1**
(45) Date de publication et mention de la délivrance du brevet: **12.04.2000**
(21) Numéro de dépôt: 97400009.3
(22) Date de dépôt: 03.01.1997
(51) Int. Cl.: F16L 33/00, B29C 61/06, B29C 65/66

(54) **Manchon de gaine tressée destiné à être enfilé sur au moins un élément allongé à protéger, et procédé de fabrication d'un tel manchon**
Geflochtener Schlauch zum Umhüllen eines langgestreckten Elementes und Verfahren zur Herstellung eines solchen Schlauches
Braided sleeve for protecting an elongated element and method for manufacturing the same

(30) Priorité: 10.01.1996 FR 9600206
(43) Date de publication de la demande: 16.07.1997
(73) Titulaire: Gremco S.A., 93400 Saint Ouen (FR)
(72) Inventeur: Lancien, Jean-Claude, 60620 Cuvergnon (FR); Guillemin, Christian, 93400 Saint-Ouen (FR)
(74) Mandataire: Jaunez, Xavier

(56) Documents cités:
- EP-A- 0 172 039
- BE-A- 901 683
- US-A- 3 466 210
- US-A- 3 861 972
- US-A- 4 144 404
- US-A- 4 836 872

## Description

L'invention concerne les manchons de protection, et plus spécialement les manchons de gaine tressée destinés à être enfilés sur au moins un élément allongé.

Les éléments allongés concernés que l'on souhaite protéger peuvent être par exemple des canalisations, tubes ou raccords servant à l'acheminement de fluides liquides ou gazeux. Dans le cas particulier des véhicules automobiles, de tels éléments sont présents pour assurer le transport du carburant, de l'eau, d'air, ou d'autres fluides ou mélanges gazeux. Il est alors fréquent d'enfiler un manchon de protection sur au moins une partie de la longueur de tels tubes, raccords ou canalisations, la protection assurée étant mécanique et/ou thermique et/ou acoustique.

Les éléments allongés peuvent également se présenter sous forme de faisceaux, comme c'est le cas pour des petits tubes ou surtout pour des câblages électriques. Le manchon de protection est alors enfilé sur le faisceau, et tient plus ou moins bien ensemble les tubes ou câblages constitutifs du faisceau.

Le domaine de la construction automobile est typiquement concerné par l'utilisation de manchons de protection, et en particulier de manchons de gaine tressée. Les éléments protégés doivent en effet occuper un encombrement aussi réduit que possible, tout en résistant aux frottements et aux échauffements. Les manchons de protection doivent alors être positionnés avec précision sur les éléments à protéger, et leur position doit rester stable malgré les inévitables vibrations.

Plusieurs types de solutions ont déjà fait l'objet de développements à l'échelle industrielle.

On peut d'abord citer l'enveloppement du ou des éléments à protéger par une gaine thermorétractable. Cette solution est économique, mais le montage est délicat à mettre en oeuvre. De plus, si l'élément à protéger est une canalisation souple, la présence d'une gaine de protection thermorétractée sur tout ou partie de sa longueur a pour effet de rigidifier la canalisation, de sorte que l'on perd la souplesse de la forme. Enfin, la protection mécanique conférée est limitée, et en tout cas très inférieure à celle que peut procurer un manchon de gaine tressée, et la protection thermique est à peu près inexistante.

On peut aussi citer l'enveloppement par un tube enfilé sur l'élément ou le faisceau d'éléments à protéger. Un tel tube induit une surépaisseur importante, surtout si toute la longueur de l'élément ou du faisceau d'éléments est concernée. Si une partie seulement de la longueur est concernée, il faut en plus prévoir des éléments de fixation (colliers, bagues thermorétractables, ruban adhésif) aux extrémités du tube.

Enfin, il faut citer les manchons de gaine tressée, qui peuvent être en matière plastique, métallique, textile, ou en mélange de tels matériaux, enduits ou non enduits. Ces manchons sont habituellement difficiles à enfiler sur le ou les éléments à protéger. En effet, le bord libre des manchons présente habituellement une soudure périphérique au niveau des extrémités des brins constitutifs afin d'éviter un effilochage : ceci a pour effet de figer le diamètre d'extrémité du manchon, et d'empêcher une expansion que l'on obtiendrait aisément en comprimant le manchon suivant son axe longitudinal (effet dit "push back"), et donc de rendre délicat l'enfilage sur une tubulure ou un faisceau dont le diamètre externe est juste inférieur au diamètre nominal du manchon de gaine tressée. Si l'on veut pouvoir évaser l'extrémité du manchon, afin de faciliter l'enfilage, il faut alors renoncer à toute soudure en bout, et l'extrémité est alors plus ou moins ébouriffée selon les types de brins constituant la gaine tressée. Par ailleurs, de tels manchons de gaine tressée ont souvent la propriété de glisser sur l'élément à protéger, et ce d'autant plus que cet élément est soumis à des vibrations : ceci oblige alors à prévoir, au niveau des extrémités du manchon, des organes rapportés (colliers métalliques, bagues en matière plastique, ruban adhésif, ruban auto-amalgamant, etc...) serrant les extrémités sur l'élément à protéger.

On a ainsi proposé d'utiliser une bague thermorétractable disposée au voisinage de l'extrémité d'une tresse afin de fixer cette tresse à l'extrémité d'un barreau métallique, comme cela est décrit dans le document BE-A-901.683.

Le document US-A-4,144,404 décrit une technique analogue pour le raccordement de câbles électriques, avec une tresse de renforcement partiellement enfilée de chaque côté d'un tube métallique, et une enveloppe extérieure qui est thermorétractée pour resserrer l'autre extrémité de la tresse sur un câble.

Les documents US-A-4,836,872 et EP-A-0 172 039 décrivent des techniques de raccordement utilisant une enveloppe extérieure thermorétractable entourant une tresse de renforcement.

Pour compléter l'arrière-plan technologique de l'invention, on peut enfin citer le document US-A-3,466,210 décrivant la réalisation d'un manchon isolant tissé, formé à partir de fils de chaîne en matériau fibreux et de fils de trame en matériau thermorétractable, ledit manchon étant revêtu de résine ou de vernis spécifique, et le document US-A-3,861,972 décrivant la réalisation d'un embout de cathéter, avec la rétraction de manchons tubulaires sur un tube flexible de cathéter.

L'invention a précisément pour but de résoudre le problème précité en concevant un manchon de gaine tressée ne pré-sentant pas les inconvénients et/ou limitations précités.

L'invention a ainsi pour objet de réaliser un manchon de gaine tressée qui soit à la fois commode à enfiler et simple à fixer une fois mis en place, et ce pour des types très variés de gaines tressées.

Ce problème est résolu conformément à l'invention grâce à un manchon de gaine tressée destiné à être enfilé sur au moins un élément allongé à protéger, le manchon présentant au moins une extrémité expansée dont le diamètre est supérieur au diamètre nominal de la gaine, laquelle extrémité expansée incluant une certaine quantité d'adhésif entre les filaments constitutifs, et étant entourée, au moins jusqu'à son bord libre, par une bague en matière plastique thermorétractable, ladite bague étant partiellement rétractée de façon à pouvoir être ensuite thermorétractée une fois le manchon mis en place sur le ou les éléments allongés pour serrer l'extrémité expansée et fixer en position ledit manchon.

Selon un mode d'exécution particulier, la bague présente une face interne revêtue d'un adhésif qui fusionne à la température de rétraction de ladite bague. En variante, la bague présente une paroi interne thermofusible de façon que la face interne soit adhésive à la température de rétraction de ladite bague.

Selon un autre mode d'exécution, la bague présente une face interne non-adhésive à la température de rétraction de ladite bague, et l'adhésif prévu entre les filaments constitutifs est choisi pour fluer à ladite température de rétraction.

Conformément à un premier type de variante, la bague s'arrête au niveau du bord libre de l'extrémité expansée.

Selon un autre type de variante, la bague se prolonge au-delà du bord libre de l'extrémité expansée. Le prolongement ainsi prévu peut être évasé, de façon à former un véritable embout d'enfilage facilitant encore la mise en place du manchon.

Dans ce cas, le prolongement de la bague peut participer à la fixation en position du manchon grâce à un adhésif prévu sur sa face interne, ou en variante constituer une partie perdue qui est supprimée une fois le manchon mis en place.

Par ailleurs, il peut s'avérer intéressant que la bague présente extérieurement un marquage et/ou une couleur d'identification.

On pourra naturellement prévoir que les deux extrémités du manchon de gaine tressée sont expansées et entourées chacune par une bague respective thermorétractable dont la face interne est éventuellement adhésive à chaud.

L'invention concerne également un procédé de fabrication d'un manchon précité, à partir d'un tronçon de gaine tressée.

Dans le cas d'une bague dont la face interne est adhésive, le procédé est plus précisément remarquable par les étapes successives suivantes :
- on enfile une extrémité du tronçon de gaine tressée sur un mandrin conformateur de façon à expanser cette extrémité ;
- on enfile par l'autre extrémité du tronçon une bague thermorétractable et à face interne adhésive à chaud, de façon à entourer l'extrémité expansée au moins jusqu'au bord libre de celle-ci ;
- on chauffe l'extrémité expansée ainsi revêtue jusqu'à thermorétraction de la bague, avec fusion de l'adhésif de ladite bague ;
- on refroidit l'extrémité expansée pour stabiliser la dimension circonférentielle de la bague et durcir l'adhésif de ladite bague ;
- on retire le mandrin conformateur de l'extrémité concernée du tronçon de gaine tressée.

Dans le cas d'une bague dont la face interne est non-adhésive à la température de rétraction de ladite bague, le procédé comporte les étapes successives suivantes :
- on enfile une extrémité du tronçon de gaine tressée sur un mandrin conformateur de façon à expanser cette extrémité ;
- on dépose une certaine quantité d'adhésif sur l'extrémité ainsi expansée ;
- on enfile par l'autre extrémité du tronçon une bague thermorétractable, de façon à entourer l'extrémité expansée adhésivée au moins jusqu'au bord libre de celle-ci;
- on chauffe l'extrémité expansée ainsi revêtue jusqu'à thermorétraction de la bague, avec fusion de l'adhésif déposé sur ladite extrémité ;
- on refroidit l'extrémité expansée pour stabiliser la dimension circonférentielle de la bague et durcir l'adhésif inclus dans ladite extrémité;
- on retire le mandrin conformateur de l'extré-mité concernée du tronçon de gaine tressée.

En variante, le procédé précité est modifié en remplaçant les deux premières étapes par les deux étapes suivantes :
- on trempe une extrémité du tronçon de gaine tressée dans un bain d'adhésif ;
- on enfile l'extrémité ainsi adhésivée sur un mandrin conformateur de façon à expanser cette extrémité.

D'autres caractéristiques et avantages de l'invention apparaîtront plus clairement à la lumière de la description qui va suivre et des dessins annexés, concernant un mode de réalisation particulier, en référence aux figures où :
- la figure 1 est une vue en perspective d'un manchon de gaine tressée ayant une extrémité expansée agencée conformément à l'invention ;
- la figure 2 est une coupe axiale du manchon de la figure 1 ;
- les figures 3a à 3c illustrent les étapes de mise en place d'un tel manchon sur une tubulure ;
- les figures 4a à 4d illustrent schématiquement les étapes de fabrication d'un manchon du type précité à partir d'un tronçon de gaine tressée, selon un procédé conforme à l'invention ;
- la figure 5 est une vue en perspective d'une variante de manchon de gaine tressée conforme à l'invention, avec deux extrémités expansées, dont l'une est équipée d'une bague qui se prolonge au-delà du bord libre d'extrémité de la gaine tressée ;
- la figure 6 est une coupe axiale du manchon de la figure 5 ;
- la figure 7 illustre la mise en place d'un tel manchon sur une tubulure, manchon dont la gaine tressée est de structure très lâche;
- les figures 8a à 8d illustrent schématiquement les étapes de fabrication d'un tel manchon à bague prolongée.

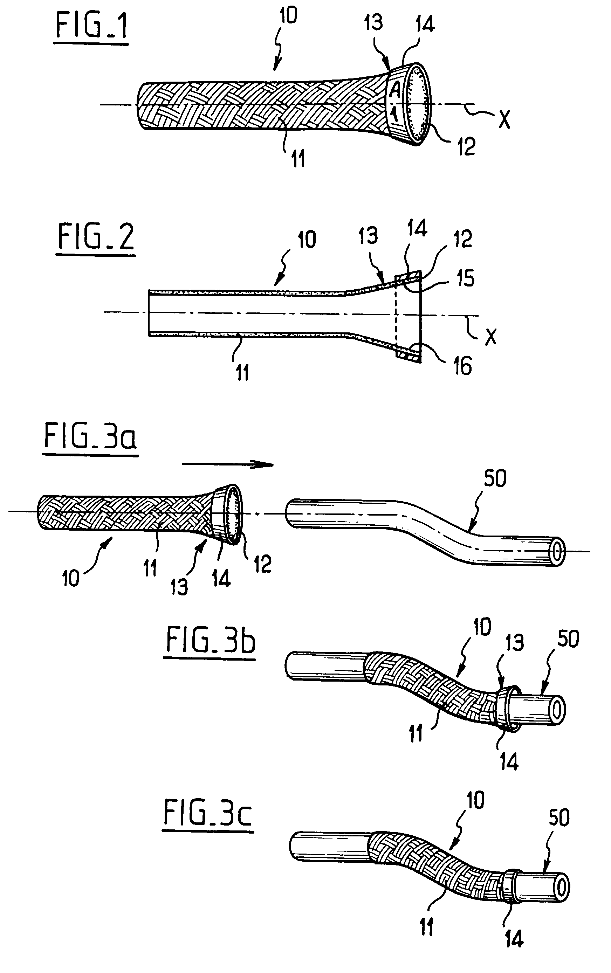

Les figures 1 et 2 illustrent un manchon 10 de gaine tressée réalisé conformément à l'invention, ledit manchon étant destiné à être enfilé sur au moins un élément allongé à protéger. Le manchon 10 comporte une portion principale tressée 11 de forme essentiellement cylindrique, dont l'axe principal est noté X. La gaine tressée pourra être réalisée en matière plastique, métallique ou en matière combinant des matériaux différents (par exemple PET et coton, ou polyester et cuivre). On pourra prévoir un matériau enduit, en particulier une gaine tressée enduite extérieurement, par exemple avec une enduction en élastomère de silicone pour une tresse de fibre de verre, dès lors que cette enduction n'empêche pas l'expansion de la gaine tressée.

Conformément à une caractéristique essentielle de l'invention, le manchon 10 présente au moins une extrémité expansée 13 dont le diamètre est supérieur au diamètre nominal de la gaine, laquelle extrémité expansée inclut une certaine quantité d'adhésif entre les filaments constitutifs, et est entourée, ici jusqu'à son bord libre 12, par une bague 14 en matière plastique thermorétractable, ladite bague étant partiellement rétractée de façon à pouvoir être ensuite thermorétractée une fois que le manchon 10 est mis en place sur le ou les éléments allongés à protéger, pour serrer l'extrémité expansée 13 et fixer en position le manchon 10 grâce à l'adhésif et/ou au serrage exercé par la bague 14.

On constate ainsi que l'extrémité expansée 13 conserve cette forme de façon stable grâce à la combinaison de la bague thermorétractable 14 qui n'est que partiellement rétractée sur cette extrémité expansée 13, et de l'adhésif prévu entre les filaments constitutifs.

Conformément à un premier mode d'exécution, la bague 14 présente une face interne 15 qui est adhésive. L'adhésif va alors migrer, lors de la première phase de rétraction de la bague 14 sur l'extrémité expansée 13, à travers les filaments constituant la gaine tressée, des particules d'adhésif pouvant d'ailleurs arriver jusqu'au niveau de la face interne notée 16 de la gaine tressée 11. L'adhésif concerne ainsi les extrémités des fibres constituant la gaine tressée de façon à figer la forme expansée qui facilite considérablement l'enfilage du manchon sur le ou les éléments allongés à protéger. Si cela est prévu, la présence d'adhésif au niveau de la face interne 16 du tronçon de gaine 11 peut permettre, lors de la phase terminale de rétraction de la bague une fois le manchon mis en place sur le ou les éléments allongés, de réaliser, simultanément à la rétraction finale de l'extrémité 13 de la gaine, un collage local permettant de fixer en position le manchon sur l'élément à protéger.

Conformément à un autre mode d'exécution, la bague 14 présente une face interne 15 non-adhésive à la température de rétraction de ladite bague, et l'adhésif prévu entre les filaments constitutifs est choisi pour fluer à cette température de rétraction. Dans ce cas, l'adhésif est donc déposé directement (par exemple au pinceau ou par trempage dans un bain d'adhésif) sur l'extrémité expansée 13, indépendamment de la bague 14 à face interne non-adhésive. Comme pour le mode d'exécution précédent, lors de la rétraction finale de la bague 14 une fois le manchon 10 mis en place, ledit manchon est fixé en position grâce à l'adhésif et/ou au serrage exercé par la bague 14.

Ainsi, on est parvenu à réaliser un manchon de gaine tressée présentant au moins une extrémité expansée équipée extérieurement de sa bague partiellement rétractée, ce qui permet un enfilage très commode sur le ou les éléments allongés à protéger et, une fois le manchon mis en place, de récupérer la forme normale d'un manchon dont la section est essentiellement constante, avec de surcroît une liaison fixant en position le manchon mis en place, évitant ainsi tout glissement intempestif dudit manchon, par exemple sous l'effet des vibrations imprimées aux éléments protégés.

Les figures 3a à 3c illustrent les étapes de mise en place du manchon 10 précédemment décrit sur une tubulure 50, cette tubulure n'étant qu'un exemple d'élément allongé susceptible d'être protégé par un manchon de gaine tressée agencé conformément à l'invention.

L'extrémité expansée 13 du manchon de gaine tressée 10 avec sa bague prérétractée 14 est ainsi présentée au niveau d'une extrémité de la tubulure 50 (figure 3a), afin d'être enfilée sur cette tubulure jusqu'à la position désirée, comme cela est illustré sur la figure 3b.
Une fois la gaine tressée étirée sur elle-même de manière à supprimer tout effet "push back", il suffit alors de chauffer à nouveau l'extrémité expansée 13 du manchon 10, de façon à terminer la rétraction de la bague 14 pour resserrer cette extrémité sur la surface extérieure de la tubulure 50, tout en réactivant l'adhésif initialement prévu sur la face interne de la bague thermorétractable 14 ou entre les filaments constitutifs, pour fixer en position le manchon 10 sur la tubulure 50 grâce à l'adhésif de la bague 14 et/ou au serrage exercé par ladite bague. On obtient finalement un manchon de type cylindrique, présentant au niveau d'au moins une de ses extrémités une bague en matière plastique ayant l'apparence d'un collier, comme cela est illustré sur la figure 3c.

Lorsque l'on souhaite utiliser une bague 14 en matière plastique thermorétractable présentant une face interne adhésive, ceci peut être obtenu soit en revêtant d'un adhésif la face interne 15 de la bague 14, lequel adhésif étant alors choisi pour fusionner à la température de rétraction de ladite bague, soit présenter une paroi interne thermofusible de façon que la face interne soit adhésive à la température de rétraction de ladite bague.

Dans tous les cas, on s'arrangera pour que l'adhésif de la bague fusionne sous l'effet d'une montée en température atteignant la température qui permet de réaliser la prérétraction de la bague thermorétractable. Cet adhésif sera caractérisé par un fluage à l'état réchauffé, et un collage après refroidissement. On pourra utiliser tout type d'adhésif classique tel que colle à chaud ou "hot melt", pour une bague thermorétractable en matière plastique telle que EVA, polyamide, polyéthylène, polyimide, ou combinaison de ces polymères.

Une façon simple pour obtenir une bague à face interne adhésive consiste à découper des tronçons de largeur désirée à partir d'une gaine tubulaire déjà encollée. Dans le cas d'une bague à face interne non-adhésive, on pourra naturellement utiliser aussi le tronçonnage d'une gaine tubulaire. Dans tous les cas, la gaine tubulaire pourra être choisie de couleur prédétermi-née à des fins de marquage d'identification.

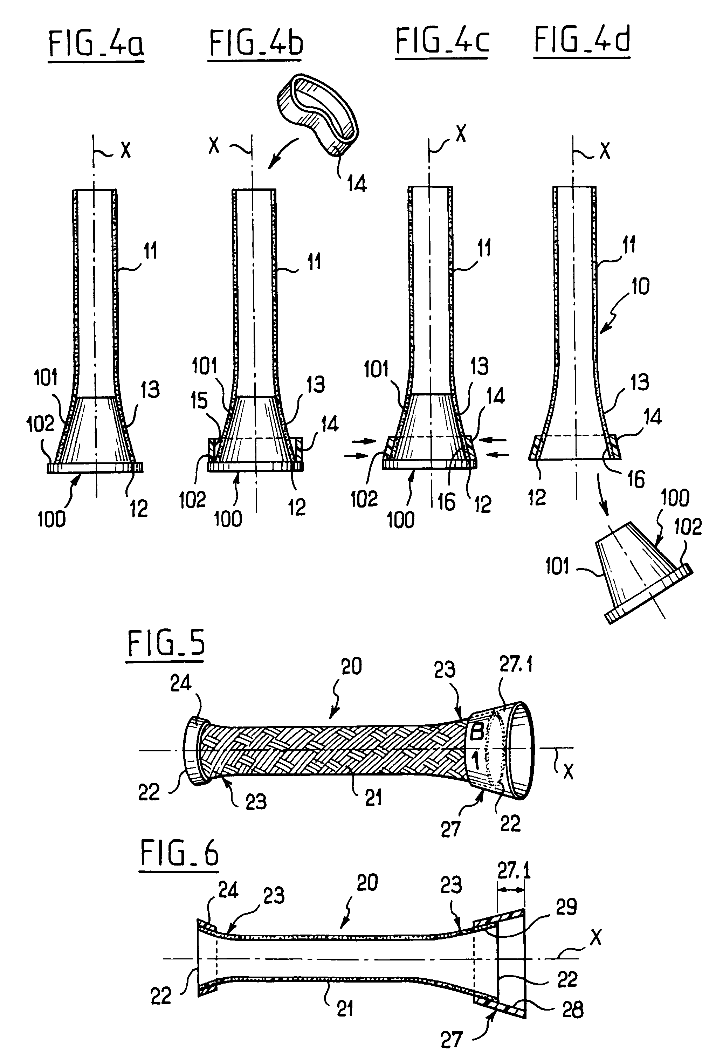

Les figures 4a à 4d illustrent schématiquement les étapes de fabrication d'un manchon du type précité, à partir d'un tronçon de gaine tressée, avec une bague thermorétractable à face interne adhésive, selon un procédé conforme à l'invention :
- figure 4a : on enfile une extrémité du tronçon 11 de gaine tressée sur un mandrin conformateur 100 de façon à expanser cette extrémité ; le mandrin conformateur 100 présente une paroi latérale 101 ici de forme sensible-ment tronconique (on pourra en variante prévoir une forme cylindrique de diamètre adapté), et un épaulement 102 contre lequel vient en appui le bord libre 12 du tronçon de gaine 11.
- figure 4b : l'extrémité expansée 13 du tronçon de gaine présentant déjà la forme désirée, grâce au mandrin conformateur 100, on peut alors enfiler la bague thermorétractable à face interne adhésive 14 par l'autre extrémité du tronçon de gaine, et amener cette bague autour de l'extrémité expansée 13, ici en appui contre l'épaulement 102, de sorte que la bague 14 s'arrête en l'espèce exactement au niveau du bord libre 12 de l'extrémité expansée 13;
- figure 4c : on met en oeuvre un chauffage local de l'extrémité expansée 13, symbolisé ici par des flèches radiales, jusqu'à obtenir une température suffisante pour provoquer une prérétraction de la bague 14 sur la surface extérieure de l'extrémité expansée 13 du tronçon de gaine tressée 11. La chaleur nécessaire pourra être procurée au moyen d'un chauffage par air chaud, par infrarouge, ou encore par trempage en eau chaude. Si l'on prend soin de monter une bague thermorétractable ayant un diamètre avant rétraction qui est de 15 à 20 % supérieur au diamètre extérieur de la gaine tressée dans sa position expansée sur le mandrin 100, on parvient à réaliser une rétraction optimale, tout en respectant les caractéristiques de tenue en température des composants de la gaine tressée et de la température de rétraction de la bague thermorétractable. La rétraction se faisant bague libre, on obtient une répartioptimale des masses de la bague thermorétractable autour de la gaine tressée. Le temps de rétraction sera dans la pratique dicté à la fois par le serrage désiré de la bague thermorétractable sur la gaine tressée, et par le fluage de l'adhésif revêtant la face interne de la bague ou présent sur la paroi interne thermofusible de ladite bague, entre les brins de la tresse, assurant ainsi le maintien dans sa forme expansée de l'extrémité de la gaine tressée. La quantité d'adhésif sera éventuellement choisie suffisamment importante pour que l'on ait un passage d'adhésif entre les filaments de la tresse permettant de réaliser un collage direct de l'extrémité du manchon sur l'élément allongé à protéger lors de la rétraction finale. Etant donné que la rétraction n'est que partielle lorsque l'extrémité du tronçon de gaine est encore sur son mandrin conformateur, il est préférable de laisser refroidir suffisamment longtemps, ce qui peut être amélioré par exemple par un trempage dans l'eau froide avec le mandrin encore en place, afin de stabiliser la dimension circonférentielle de la bague thermorétractable, et d'empêcher la poursuite de sa rétraction du fait de la chaleur ;
- figure 4d : la bague thermorétractable 14 étant stabilisée dans sa prérétraction, on peut alors retirer le mandrin conformateur 100.

Ainsi, le procédé de fabrication utilisé se compose des étapes successives suivantes :
- on enfile une extrémité du tronçon 11 de gaine tressée sur le mandrin conformateur 100 de façon à expanser cette extrémité ;
- on enfile par l'autre extrémité du tronçon 11 la bague 14 thermorétractable à face interne adhésive à chaud, de façon à entourer l'extrémité expansée 13 au moins jusqu'au bord libre 12 de celle-ci ;
- on chauffe l'extrémité expansée 13 ainsi revêtue jusqu'à thermorétraction de la bague 14, avec fusion de l'adhésif de ladite bague ;
- on refroidit l'extrémité expansée pour stabili-ser la dimension circonférentielle de la bague 14 et durcir l'adhésif de ladite bague ;
- on retire enfin le mandrin conformateur 100 de l'extrémité concernée du tronçon 11 de gaine tressée.

Ainsi que cela a été dit plus haut, l'adhésif de la bague est activé lors de la chaleur apportée pour prérétracter ladite bague sur l'extrémité expansée du tronçon de gaine, de sorte que la paroi interne de la gaine (paroi 16) peut présenter des traces plus ou moins importantes d'adhésif. Par suite, pour faciliter l'extraction du mandrin conformateur, il sera avantageux de réaliser ledit mandrin en un matériau à bas coefficient de frottement, par exemple en choisissant un matériau tel que le polytétra-fluoréthylène.

Dans le cas d'une bague thermorétractable à face interne non-adhésive, le procédé précédemment décrit est peu modifié et les figures 4a à 4d restent valables. La différence réside alors essentiellement dans la présence d'une étape au cours de laquelle on dépose une certaine quantité d'adhésif sur l'extrémité du tronçon de gaine tressé, ce dépôt pouvant être effectué après conformation (par exemple au pinceau) ou avant conformation (par exemple par trempage dans un bain d'adhésif).

Dans la première variante, l'étape de dépôt d'adhésif sera une étape intermédiaire (non représentée ici) intervenant entre les situations des figures 4a et 4b, avec un dépôt (par exemple au pinceau) d'une certaine quantité d'adhésif sur l'extrémité expansée.

Le procédé de fabrication utilisé se compose alors des étapes successives suivantes :
- on enfile une extrémité du tronçon 11 de gaine tressée sur un mandrin conformateur 100 de façon à expanser cette extrémité ;
- on dépose, par exemple au pinceau, une certaine quantité d'adhésif sur l'extrémité ainsi expansée 13 ;
- on enfile par l'autre extrémité du tronçon une bague thermorétractable 14 à face interne non-adhésive à chaud, de façon à entourer l'extrémité expansée adhésivée 13 au moins jusqu'au bord libre 12 de celle-ci ;
- on chauffe l'extrémité expansée 13 ainsi revêtue jusqu'à thermorétraction de la bague 14, avec fusion de l'adhésif déposé sur ladite extrémité ;
- on refroidit l'extrémité expansée 13 pour stabiliser la dimension circonférentielle de la bague 14 et durcir l'adhésif inclus dans ladite extrémité;
- on retire enfin le mandrin conformateur 100 de l'extrémité concernée du tronçon 11 de gaine tressée.

Dans la deuxième variante, l'étape de dépôt d'adhésif sera une étape préliminaire (non représentée ici) intervenant avant la situation de la figure 4a, avec un dépôt d'une certaine quantité d'adhésif sur l'extrémité non encore expansée. Ce dépôt peut être réalisé par trempage dans un bain d'adhésif, notamment une formule d'adhésif en poudre ou en suspension.

Le procédé de fabrication précédemment explicité est alors modifié pour ses deux premières étapes, selon lesquelles :
- on trempe une extrémité du tronçon 11 de gaine tressée dans un bain d'adhésif ;
- on enfile l'extrémité ainsi adhésivée 13 sur un mandrin conformateur 100 de façon à expanser cette extrémité.

Après ces deux étapes, la mise en place de la bague et la thermorétraction de celle-ci sont réalisées identiquement à ce qui a été déjà décrit.

Les figures 5 et 6 illustrent une variante de manchon de gaine tressée conforme à l'invention, avec deux extrémités expansées, dont l'une est équipée d'une bague qui se prolonge au-delà du bord libre d'extrémité.

On distingue ainsi un manchon 20, dont la portion principale 21 en gaine tressée présente une première extrémité expansée 23 revêtue d'une bague prérétractée 24 affleurant au niveau de son bord libre 22, conformément à la technique précédemment décrite. L'autre extrémité 23 du manchon 20 présente quant à elle une bague 27, également thermorétractable et éventuellement à face interne adhésive, mais qui, contrairement à la bague 24, se prolonge au-delà du bord libre 22 de l'extrémité expansée concernée. Le prolongement obtenu est noté 27.1. Sur la figure 6, on distingue l'agencement du manchon de gaine tressée 20 avec ses deux bagues 24 et 27. On a noté 28 la face interne de la bague prolongée 27, et 29 la face interne de la gaine tressée 21. Le prolongement 27.1 est de préférence évasé pour faciliter la mise en place du manchon par sa bague prolongée 27 qui constitue alors un véritable embout de manipulation.

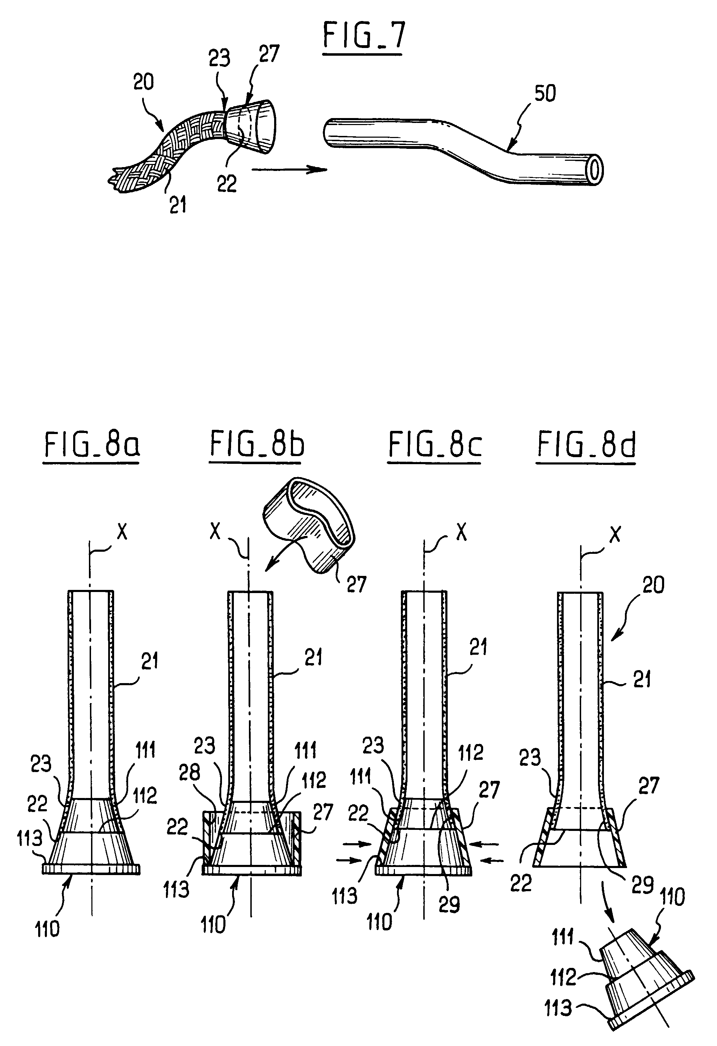

Ceci est particulièrement intéressant lorsque l'on utilise une gaine tressée de type lâche (par exemple constituée de multifilaments de polyester ou autres polymères), comme cela est illustré sur la figure 7, une telle gaine étant autrement particulièrement délicate à enfiler sur une tubulure allongée et coudée 50. L'embout évasé formé par la bague 27 permet de positionner facilement l'extrémité du manchon sur l'extrémité de la tubulure 50, puis de tirer progressivement le manchon sur ladite tubulure. Une fois le manchon de gaine mis en place dans sa position définitive sur la tubulure 50, il suffit alors de procéder à la rétraction finale de la bague 27, le manchon 20 étant alors fixé en position grâce à l'adhésif et/ou au serrage exercé par la bague 27. On peut naturellement retrouver l'effet précédent au niveau de l'extrémité expansée de la gaine tressée, avec migration de l'adhésif de la bague 27 au niveau de la face interne de la gaine tressée. On peut trouver en plus un collage supplémentaire grâce à l'adhésif présent sur le prolongement 27.1 de la bague 27. Dans ce cas, le prolongement 27.1 de la bague participe à la fixation en position du manchon grâce à l'adhésif de sa face interne. En variante, on pourra considérer que le prolongement 27.1 de la bague 27 est une partie perdue qui est supprimée une fois le manchon mis en place (dans ce cas, on utilisera plutôt une bague à face interne non-adhésive).

Les figures 8a à 8d illustrent schématiquement les étapes de fabrication d'un tel manchon à bague prolongée, de la même façon que les étapes de fabrication du manchon précédent avec les figures 4a à 4d :
- figure 8a : l'extrémité du tronçon 21 de gaine tressée est enfilée sur un mandrin conformateur 110 jusqu'à butée de son bord libre 22 contre un épaulement 112 délimitant la face tronconique 111 dudit mandrin ;
- figure 8b : on enfile par l'autre extrémité du tronçon 21 une bague 27 thermorétractable et à face interne 28 adhésive à chaud, de façon à entourer l'extrémité expansée 23 : en l'espèce on a prévu un deuxième épaulement 113 sur le mandrin conformateur 110, qui sert à positionner correctement la bague prolongée 27 ;
- figure 8c : on chauffe l'extrémité expansée 23 ainsi revêtue jusqu'à thermorétraction de la bague 27, avec fusion de l'adhésif de ladite bague ;
- figure 8d : après refroidissement suffisant de l'extrémité expansée 23 et stabilisation de la dimension circonférentielle de la bague prérétractée 27, on peut alors retirer le mandrin conformateur 110.

Dans le cas d'une bague 27 à face interne non-adhésive à chaud, on procédera soit à une étape intermédiaire intervenant entre les positions des figures 8a à 8b, consistant à déposer (par exemple au pinceau) une certaine quantité d'adhésif sur l'extrémité expansée 23, soit à une étape préliminaire intervenant avant la position de la figure 8a, consistant à tremper l'extrémité non encore expansée dans un bain d'adhésif, comme cela a déjà été expliqué pour la variante précédente.

Par ailleurs, comme cela a été illustré sur les figures 1 et 5, il sera possible de prévoir que la bague 14 (ou 27) présente extérieurement un marquage d'identification. Ce marquage peut être fait à chaud, par transfert thermique, tampographie, etc... sur la bague thermorétractable, ou encore en utilisant une gaine thermorétractable d'une couleur particulière choisie à l'avance à partir de laquelle on tronçonne des bagues, afin d'effectuer tout repérage nécessaire (numérique, alphabétique, alphanumérique, etc...). On utilise alors de façon élégante une surface libre disponible, dont on ne disposait pas avec les manchons de gaine tressée de l'art antérieur, un tel marquage n'étant auparavant envisageable que sur des moyens de fixation rapportés tels que colliers, etc...

On est ainsi parvenu à réaliser un manchon de gaine tressée qui est à la fois commode à enfiler et simple à fixer une fois mis en place, et ce pour des types très variés de gaines tressées.

L'invention n'est pas limitée aux modes de réalisation qui viennent d'être décrits, son étendue étant définie par les revendications suivantes.

## Revendications

1. Manchon de gaine tressée destiné à être enfilé sur au moins un élément allongé à protéger, le manchon (10 ; 20) présentant au moins une extrémité expansée (13 ; 23) dont le diamètre est supérieur au diamètre nominal de la gaine, laquelle extrémité expansée incluant une certaine quantité d'adhésif entre les filaments constitutifs, et étant entourée, au moins jusqu'à son bord libre (12 ; 22), par une bague (14 ; 24, 27) en matière plastique thermorétractable, ladite bague étant partiellement rétractée de façon à pouvoir être ensuite thermorétractée une fois le manchon (10 ; 20) mis en place sur le ou les éléments allongés pour serrer l'extrémité expansée et fixer en position ledit manchon.

2. Manchon de gaine tressée selon la revendication 1, caractérisé en ce que la bague (14 ; 27) présente une face interne (15 ; 28) revêtue d'un adhésif qui fusionne à la température de rétraction de ladite bague.

3. Manchon de gaine tressée selon la revendica-tion 1, caractérisé en ce que la bague (14 ; 27) présente une paroi interne thermofusible de façon que la face interne (15 ; 28) soit adhésive à la température de rétraction de ladite bague.

4. Manchon de gaine tressée selon la revendica-tion 1, caractérisé en ce que la bague (14 ; 27) présente une face interne (15 ; 28) non-adhésive à la température de rétraction de ladite bague, et l'adhésif prévu entre les filaments constitutifs est choisi pour fluer à ladite température de rétraction.

5. Manchon de gaine tressée selon l'une des revendications 1 à 4, caractérisé en ce que la bague (14 ; 24) s'arrête au niveau du bord libre (12 ; 22) de l'extrémité expansée (13 ; 23).

6. Manchon de gaine tressée selon l'une des revendications 1 à 4, caractérisé en ce que la bague (27) se prolonge au-delà du bord libre (22) de l'extrémité expansée (23).

7. Manchon de gaine tressée selon la revendication 6, caractérisé en ce que le prolongement (27.1) de la bague (27) est évasé.

8. Manchon de gaine tressée selon la revendication 6 ou la revendication 7, caractérisé en ce que le prolongement (27.1) de la bague (27) participe à la fixation en position du manchon grâce à un adhésif prévu sur sa face interne.

9. Manchon de gaine tressée selon la revendication 6 ou 7, caractérisé en ce que le prolongement (27.1) de la bague (27) est une partie perdue qui est supprimée une fois le manchon mis en place.

10. Manchon de gaine tressée selon l'une des revendications 1 à 9, caractérisé en ce que la bague (14 ; 24, 27) présente extérieurement un marquage et/ou une couleur d'identification.

11. Manchon de gaine tressée selon l'une des revendications 1 à 10, caractérisé en ce que ses deux extrémités (23) sont expansées et entourées chacune par une bague respective (24, 27) thermorétractable dont la face interne est éventuellement adhésive à chaud.

12. Procédé de fabrication d'un manchon (10 ; 20) selon la revendication 1 et la revendication 2 ou la revendication 3 à partir d'un tronçon de gaine tressée, comprenant les étapes successives suivantes :
- on enfile une extrémité du tronçon (11 ; 21) de gaine tressée sur un mandrin conformateur (100 ; 110) de façon à expanser cette extrémité ;
- on enfile par l'autre extrémité du tronçon (11; 21) une bague (14 ; 27) thermorétractable et à face interne (15 ; 28) adhésive à chaud, de façon à entourer l'extrémité expansée (13 ; 23) au moins jusqu'au bord libre (12 ; 22) de celle-ci ;
- on chauffe l'extrémité expansée (13 ; 23) ainsi revêtue jusqu'à thermorétraction de la bague (14 ; 27), avec fusion de l'adhésif de ladite bague ;
- on refroidit l'extrémité expansée (13 ; 23) pour stabiliser la dimension circonférentielle de la bague (14 ; 27) et durcir l'adhésif de ladite bague ;
- on retire le mandrin conformateur (100 ; 110) de l'extrémité concernée du tronçon (11 ; 21) de gaine tressée.

13. Procédé de fabrication d'un manchon (10 ; 20) selon les revendications 1 et 4 à partir d'un tronçon de gaine tressée, comprenant les étapes successives suivantes :
- on enfile une extrémité du tronçon (11 ; 21) de gaine tressée sur un mandrin conformateur (100 ; 110) de façon à expanser cette extrémité ;
- on dépose une certaine quantité d'adhésif sur l'extrémité ainsi expansée (13 ; 23) ;
- on enfile par l'autre extrémité du tronçon une bague thermorétractable (14 ; 27), de façon à entourer l'extrémité expansée adhésivée (13 ; 23) au moins jusqu'au bord libre (12 ; 22) de celle-ci ;
- on chauffe l'extrémité expansée (13 ; 23) ainsi revêtue jusqu'à thermorétraction de la bague (14 ; 27), avec fusion de l'adhésif déposé sur ladite extrémité ;
- on refroidit l'extrémité expansée (13 ; 23) pour stabiliser la dimension circonférentielle de la bague (14 ; 27) et durcir l'adhésif inclus dans ladite extrémité;
- on retire le mandrin conformateur (100 ; 110) de l'extrémité concernée du tronçon (11 ; 21) de gaine tressée.

14. Procédé de fabrication d'un manchon (10 ; 20) selon les revendications 1 et 4 à partir d'un tronçon de gaine tressée, comprenant les étapes successives suivantes :
- on trempe une extrémité (13 ; 23) du tronçon (11 ; 21) de gaine tressée dans un bain d'adhésif ;
- on enfile l'extrémité ainsi adhésivée (13 ; 23) sur un mandrin conformateur (100 ; 110) de façon à expanser cette extrémité ;
- on enfile par l'autre extrémité du tronçon une bague thermorétractable (14 ; 27), de façon à entourer l'extrémité expansée adhésivée (13 ; 23) au moins jusqu'au bord libre (12 ; 22) de celle-ci ;
- on chauffe l'extrémité expansée (13 ; 23) ainsi revêtue jusqu'à thermorétraction de la bague (14 ; 27), avec fusion de l'adhésif déposé sur ladite extrémité ;
- on refroidit l'extrémité expansée (13 ; 23) pour stabiliser la dimension circonférentielle de la bague (14 ; 27) et durcir l'adhésif inclus dans ladite extrémité;
- on retire le mandrin conformateur (100 ; 110) de l'extrémité concernée du tronçon (11 ; 21) de gaine tressée.

## Claims

1. A braided sheath sleeve for threading over at least one elongate element to be protected, the sleeve (10; 20) having at least one expanded end (13; 23) whose diameter is greater than the nominal diameter of the sheath, with said expanded end including a certain quantity of adhesive between its component elements and being surrounded, at least as far as its free edge (12; 22), by a ring (14; 24, 27) of heat-shrink plastics material, said ring being shrunk in part only so as to be capable subsequently of being heat-shrunk once the sleeve (10; 20) has been put into place on the elongate element(s) to clamp the expanded end and fix said sleeve in position.

2. A braided sheath sleeve according to claim 1, characterized in that the ring (14; 27) has an inside face (15; 28) coated in an adhesive which melts at the shrink temperature of said ring.

3. A braided sheath sleeve according to claim 1, characterized in that the ring (14; 27) has a heat-fusible inside wall so that the inside face (15; 28) is adhesive at the shrink temperature of said ring.

4. A braided sheath sleeve according to claim 1, characterized in that the ring (14; 27) has an inside face (15; 28) that is not adhesive at the shrink temperature of said ring, and the adhesive provided between the component filaments is selected so as to flow at said shrink temperature.

5. A braided sheath sleeve according to any one of claims 1 to 4, characterized in that the ring (14; 24) stops at the free edge (12; 22) of the expanded end (13; 23).

6. A braided sheath sleeve according to any one of claims 1 to 4, characterized in that the ring (27) extends beyond the free edge (22) of the expanded end (23).

7. A braided sheath sleeve according to claim 6, characterized in that the extension (27.1) of the ring (27) is flared.

8. A braided sheath sleeve according to claim 6 or claim 7, characterized in that the extension (27.1) of the ring (27) contributes to fixing the sleeve in position by means of an adhesive provided on its inside face.

9. A braided sheath sleeve according to claim 6 or 7, characterized in that the extension (27.1) of the ring (27) is discardable and is eliminated once the sleeve has been put into place.

10. A braided sheath sleeve according to any one of claims 1 to 9, characterized in that the ring (14; 24, 27) is externally marked and/or provided with identifying color.

11. A braided sheath sleeve according to any one of claims 1 to 10, characterized in that both ends (23) thereof are expanded, each being surrounded by a respective heat-shrink ring (24, 27) whose inside face is optionally adhesive when hot.

12. A method of manufacturing a sleeve (10; 20) according to claim 1 and claim 2 or claim 3, from a length of braided sheath, the method comprising the following successive steps:
. one end of the length (11; 21) of braided sheath is threaded on a shaping mandrel (100; 110) so as to expand said end;
. a heat-shrink ring (14; 27) having an inside face (15; 28) that is adhesive when hot is threaded via the opposite end of the length (11; 21) so as to surround the expanded end (13; 23) at least as far as the free edge (12; 22) thereof;
. the expanded end (13; 23) coated in this way is heated until the ring (14; 27) heat-shrinks, with the adhesive of said ring melting;
. the expanded end (13; 23) is cooled to stabilize the circumferential size of the ring (14; 27) and to set the adhesive of said ring; and
. the shaping mandrel (100; 110) is withdrawn from the corresponding end of the length (11; 21) of braided sheath.

13. A method of manufacturing a sleeve (10; 20) according to claims 1 and 4 from a length of braided sheath, the method comprising the following successive steps:
. one end of the length (11; 21) of braided sheath is threaded on a shaping mandrel (100; 110) so as to expand said end;
. a certain quantity of adhesive is deposited on the end (13; 23) expanded in this way;
. a heat-shrink ring (14; 27) is threaded via the opposite end of the length to surround the adhesive-coated expanded end (13; 23) at least up to the free edge (12; 22) thereof;
. the expanded end (13; 23) coated in this way is heated until the ring (14; 27) heat-shrinks, with the adhesive deposited on said end melting;
. the expanded end (13; 23) is cooled to stabilize the circumferential size of the ring (14; 27) and to set the adhesive included at said end; and
. the shaping mandrel (100; 110) is withdrawn from the corresponding end of the length (11; 21) of braided sheath.

14. A method of manufacturing a sleeve (10; 20) according to claims 1 and 4 from a length of braided sheath, the method comprising the following successive steps:
. one end (13; 23) of the length (11; 21) of braided sheath is dipped in a bath of adhesive;
. the end (13; 23) coated in adhesive in this way is threaded on a shaping mandrel (100; 110) so as to expand said end;
. a heat-shrink ring (14; 27) is threaded via the opposite end of the length to surround the adhesive-coated expanded end (13; 23) at least up to the free edge (12; 22) thereof;
. the expanded end (13; 23) coated in this way is heated until the ring (14; 27) heat-shrinks, with the adhesive deposited on said end melting;
. the expanded end (13; 23) is cooled to stabilize the circumferential size of the ring (14; 27) and to set the adhesive included at said end; and
. the shaping mandrel (100; 110) is withdrawn from the corresponding end of the length (11; 21) of braided sheath.

## Patentansprüche

1. Umhüllung aus einem geflochtenen Schlauch, die dazu bestimmt ist, auf mindestens ein längliches, zu schützendes Element aufgezogen zu werden, wobei die Umhüllung (10; 20) mindestens ein aufgeweitetes Ende (13; 23) hat, dessen Durchmesser größer als der Nenndurchmesser des Schlauches ist, wobei das aufgeweitete Ende eine bestimmte Klebstoffmenge zwischen den konstitutiven Fäden enthält und mindestens bis hin zu seinem freien Rand (12; 22) von einem Ring (14; 24, 27) aus wärmeschrumpfbarem Kunststoff umgeben ist, wobei der genannte Ring derart teilweise geschrumpft ist, daß er anschließend, wenn die Umhüllung (10; 20) auf das oder die länglichen Elemente aufgezogen wurde, wärmegeschrumpft werden kann, um das aufgeweitete Ende einzuspannen und die genannte Umhüllung in ihrer Position zu befestigen.

2. Umhüllung aus einem geflochtenen Schlauch nach Anspruch 1, dadurch **gekennzeichnet,** daß der Ring (14; 27) eine Innenfläche (15; 28) hat, die von einem Klebstoff überzogen ist, der bei Schrumpftemperatur des genannten Ringes schmilzt.

3. Umhüllung aus einem geflochtenen Schlauch nach Anspruch 1, dadurch **gekennzeichnet,** daß der Ring (14; 27) eine Innenwand aufweist, die so wärmeschmelzbar ist, daß die Innenfläche (15; 28) bei Schrumpftemperatur des genannten Ringes klebend ist.

4. Umhüllung aus einem geflochtenen Schlauch nach Anspruch 1, dadurch **gekennzeichnet,** daß der Ring (14; 27) eine bei Schrumpftemperatur des genannten Ringes nicht klebende Innenfläche (15; 28) aufweist, und der zwischen den konstitutiven Fäden vorgesehene Klebstoff so gewählt wird, daß er bei Schrumpftemperatur fließt.

5. Umhüllung aus einem geflochtenen Schlauch nach einem der Ansprüche 1 bis 4, dadurch **gekennzeichnet,** daß der Ring (14; 24) in Höhe des freien Randes (12; 22) des aufgeweiteten Endes (13; 23) aufhört.

6. Umhüllung aus einem geflochteten Schlauch nach einem der Ansprüche 1 bis 4, dadurch **gekennzeichnet,** daß der Ring (27) sich über den freien Rand (22) des aufgeweiteten Endes (23) hinaus fortsetzt.

7. Umhüllung aus einem geflochtenen Schlauch nach Anspruch 6, dadurch **gekennzeichnet,** daß diese Verlängerung (27.1) des Ringes (27) konisch erweitert ist.

8. Umhüllung aus einem geflochtenen Schlauch nach Anspruch 6 oder Anspruch 7, dadurch **gekennzeichnet,** daß die Verlängerung (27.1) des Ringes (27) aufgrund eines auf ihrer Innenfläche vorgesehenen Klebstoffes zur Befestigung der Umhüllung in ihrer Position beiträgt.

9. Umhüllung aus einem geflochtenen Schlauch nach Anspruch 6 oder 7, dadurch **gekennzeichnet,** daß die Verlängerung (27.1) des Ringes (27) ein verlorener Teil ist, der entfernt wird, wenn die Umhüllung angebracht ist.

10. Umhüllung aus einem geflochtenen Schlauch nach einem der Ansprüche 1 bis 9, dadurch **gekennzeichnet,** daß der Ring (14; 24, 27) außen eine Markierung und/oder eine Farbe zur Identifizierung aufweist.

11. Umhüllung aus einem geflochtenen Schlauch nach einem der Ansprüche 1 bis 10, dadurch **gekennzeichnet,** daß ihre beiden Enden (23) aufgeweitet und jeweils von einem wärmeschrumpfbaren Ring (24, 27) umgeben sind, dessen Innenfläche gegebenenfalls warmklebend ist.

12. Verfahren zur Herstellung einer Umhüllung (10; 20) nach Anspruch 1 und Anspruch 2 oder Anspruch 3 aus einem Abschnitt eines geflochtenen Schlauches, umfassend der Reihe nach die folgenden Schritte:
- man zieht ein Ende des Abschnittes (11; 21) des geflochtenen Schlauches derart auf einen Formgebungsdorn (100; 110), daß dieses Ende aufgeweitet wird;
- man zieht einen wärmeschrumpfbaren Ring (14; 27) mit warmklebender Innenfläche derart von dem anderen Ende des Abschnittes (11; 21) her auf, daß er das aufgeweitete Ende (13; 23) mindestens bis hin zu dessen freiem Rand (12; 22) umgibt;
- man erwärmt das so umhüllte, aufgeweitete Ende (13; 23) bis hin zur Wärmeschrumpfung des Ringes (14; 27) mit einem Schmelzen des Klebstoffes des genannten Ringes;
- man kühlt das aufgeweitete Ende (13; 23) zum Stabilisieren der Abmessung des Ringes (14; 27) in Umfangsrichtung und zum Erhärten des Klebstoffes des genannten Ringes ab;
- man zieht den Formgebungsdorn (100; 110) aus dem betroffenen Ende des Abschnittes (11; 21) des geflochtenen Schlauches.

13. Verfahren zur Herstellung einer Umhüllung (10; 20) nach den Ansprüchen 1 und 4 aus einem Abschnitt eines geflochtenen Schlauches, umfassend der Reihe nach die folgenden Schritte:
- man zieht ein Ende des Abschnittes (11; 21) des geflochtenen Schlauches derart auf einen Formgebungsdorn (100; 110), daß dieses Ende aufgeweitet wird;
- man bringt eine bestimmte Klebstoffmenge auf das so aufgeweitete Ende (13; 23) auf;
- man zieht einen wärmeschrumpfbaren (14; 27) Ring derart von dem anderen Ende des Abschnittes her auf, daß er das mit Klebstoff versehene, aufgeweitete Ende (13; 23) mindestens bis hin zu dessen freiem Rand (12; 22) umgibt;
- man erwärmt das so überzogene, aufgeweitete Ende (13; 23) bis hin zur Wärmeschrumpfung des Ringes (14; 27) mit einem Schmelzen des auf das genannte Ende aufgebrachten Klebstoffes;
- man kühlt das aufgeweitete Ende (13; 23) zum Stabilisieren der Abmessung des Ringes (14; 27) in Umfangsrichtung und zum Erhärten des in dem genannten Ende enthaltenen Klebstoffes ab;
- man zieht den Formgebungsdorn (100; 110) aus dem betroffenen Ende des Abschnittes (11; 21) des geflochtenen Schlauches.

14. Verfahren zur Herstellung einer Umhüllung (10; 20) nach den Ansprüchen 1 und 4 aus einem Abschnitt eines geflochtenen Schlauches, umfassend der Reihe nach die folgenden Schritte:
- man taucht ein Ende (13; 23) des Abschnittes (11; 21) des geflochtenen Schlauches in ein Bad aus Klebstoff ein;
- man zieht das so mit Klebstoff versehene Ende (13; 23) derart auf einen Formgebungsdorn (100; 110), daß dieses Ende aufgeweitet wird;
- man zieht einen wärmeschrumpfbaren Ring (14; 27) derart von dem anderen Ende des Abschnittes her auf, daß er das aufgeweitete, mit Klebstoff versehene Ende (13; 23) mindestens bis hin zu dessen freiem Rand (12; 22) umgibt;
- man erwärmt das so überzogene, aufgeweitete Ende (13; 23) bis hin zur Wärmeschrumpfung des Ringes (14; 27) mit einem Schmelzen des auf das genannte Ende aufgebrachten Klebstoffes;
- man kühlt das aufgeweitete Ende (13; 23) zum Stabilisieren der Abmessung des Ringes (14; 27) in Umfangsrichtung und zum Erhärten des in dem genannten Ende enthaltenen Klebstoffes ab;
- man zieht den Formgebungsdorn (100; 110) aus dem betroffenen Ende des Abschnittes (11; 21) des geflochtenen Schlauches.
